**Europäisches Patentamt**

**European Patent Office**

**Office européen des brevets**

(11) Veröffentlichungsnummer: **0 398 139**
A1

## (12) EUROPÄISCHE PATENTANMELDUNG

(21) Anmeldenummer: **90108698.3**

(22) Anmeldetag: **09.05.90**

(51) Int. Cl.5: **B01D 53/04, B01D 53/26**

(30) Priorität: **13.05.89 DE 3915673**

(43) Veröffentlichungstag der Anmeldung:
**22.11.90 Patentblatt 90/47**

(84) Benannte Vertragsstaaten:
**AT BE CH DE DK ES FR GB GR IT LI LU NL SE**

(71) Anmelder: **Zander Aufbereitungstechnik GmbH**
**Im Teelbruch 86**
**D-4300 Essen 18 - Kettwig(DE)**

(72) Erfinder: **Priess, Jürgen**
**Kimplerstrasse 98**
**D-4150 Krefeld(DE)**

(74) Vertreter: **Cohausz & Florack Patentanwälte**
**Postfach 14 01 61 Schumannstrasse 97**
**D-4000 Düsseldorf 1(DE)**

(54) **Warmregenerierende Adsorptionsanlage für feuchte und gasförmige Medien mit zweiphasiger Regeneration.**

(57) Die Erfindung bezieht sich auf eine warmregenerierende Adsorptionsanlage für feuchte, gasförmige Medien mit zwei parallel zueinanderliegenden Adsorbern 1,2. Die beiden Adsorber sind mittels einer Ventilkombination wechselweise im adsorbierenden und regenerierenden Betrieb betreibbar. Für den regenerierenden Betrieb ist ein ausschließlich im Saugbetrieb betriebenes Sauggebläse 15 stromab von den Adsorbern 1,2 angeordnet. An der Saugseite des Sauggebläses 15 ist über eine absperrbare Leitung 9 und eines der 4-Wege-Ventile 7,8 eine Seite des Adsorbers angeschlossen, dessen andere Seite über das andere 4-Wege-Ventil und eine absperrbare Leitung 14 an dem Lufterhitzer 13 für anzusaugende Umgebungsluft angeschlossen ist. Die Saugseite des Sauggebläses 15 ist über eine weitere absperrbare Leitung 19 und das andere 4-Wege-Ventil 9 mit dem Adsorber 2 verbunden, der über das eine 4-Wege-Ventil und eine absperrbare Leitung 10 mit einem Einlaß für Umgebungsluft verbunden ist. Ohne Umschalten des Sauggebläses 15 wird durch den im regenerierenden Betrieb betriebenen Adsorber 2 in einer ersten Phase warme Luft im Gegenstrom und in einer zweiten Phase kühlende Luft im Gleichstrom zur Strömungsrichtung im adsorbierenden Betrieb geleitet.

- - - - - erwärmte Umgebungsluft

- — · — kühlende Umgebungsluft

## Warmregenerierende Adsorptionsanlage für feuchte und gasförmige Medien mit zweiphasiger Regeneration

Die Erfindung bezieht sich auf eine warmregenerierende Adsorptionsanlage für feuchte, gasförmige Medien mit zwei parallel zueinanderliegenden Adsorbern, die im Wechsel von adsorbierendem Betrieb auf regenerierenden Betrieb mittels in ihren Zu- und Abfuhrleitungen angeordneten 4-Wege-Ventilen umschaltbar sind, wobei für den regenerierenden Betrieb ein Sauggebläse stromab von den Adsorbern angeordnet ist, das dem jeweils zu regenerierenden Adsorber in einer ersten Phase über einen eingeschalteten Lufterhitzer erwärmte Umluft und in einer anschließenden zweiten Phase bei ausgeschaltetem Lufterhitzer kühlende Umluft mit zur Strömungsrichtung im adsorbierenden Betrieb gleicher Strömungsrichtung zuführt.

Adsorptionsanlagen dieser Art sind bekannt (Zeitschrift "Produktion" 29.9.1988, Nr. 39, Seite 26). Bei einer solchen Adsorptionsanlage dient die Kühlung nach der Phase der Regenerierung mittels erwärmter Umluft dazu, das Adsorptionsmittel möglichst schnell wieder auf volle Aktivität zu bringen. Während in der ersten Regenerationsphase die erwärmte Luft mittels eines im Druckbetrieb betriebenen Gebläses mit zur Strömungsrichtung im adsorbierenden Betrieb entgegengesetzter Strömungsrichtung zugeführt wird, wird in der zweiten Regenerationsphase Kühlluft mittels des im Saugbetrieb betriebenen Gebläses mit zur Strömungsrichtung im adsorbierenden Betrieb gleichgerichteter Strömungsrichtung zugeführt. Diese Art der Regeneration mit erwärmter Umluft im Gegenstrom und kühlender Umluft im Gleichstrom zur Strömungsrichtung des adsorbierenden Mediums ist für die Regeneration optimal. Die Umschaltung des Gebläses von Druckbetrieb auf Saugbetrieb läßt sich jedoch nicht bei allen Gebläsen verwirklichen und hat bei solchen Gebläsen, bei denen die Umschaltung möglich ist, eine Minderung des Wirkungsgrades zur Folge.

Deshalb sind Adsorptionsanlagen entwickelt worden, bei denen die Regeneration mit einem ausschließlich im Saugbetrieb arbeitenden Gebläse möglich ist. So ist bei einer ersten alternativen Adsorptionsanlage das Gebläse mit einer Schalt-Ventil-Kombination ausgerüstet, die unter Beibehaltung der Strömungsrichtung im Gebläse von der Zufuhr der zu erwärmenden Umgebungsluft über die eingeschaltete Heizeinrichtung zum Adsorber und Ableitung der erwärmten, feuchtigkeitsbeladenen Umgebungsluft von dem Adsorber in die Atmosphäre in der ersten Phase des regenerierenden Betriebes auf die Zufuhr von kühlender Umgebungsluft zum Adsorber und Ableitung der Umgebungsluft vom Adsorber über die ausgeschaltete Heizeinrichtung in die Atmosphäre umschaltbar ist. Eine solche Adsorptionsanlage ist wegen der zusätzlichen Schalt-Ventil-Kombination recht aufwendig, ermöglicht aber eine Regeneration mit erwärmter Umgebungsluft im Gegenstrom und kühlender Umgebungsluft im Gleichstrom zur Strömungsrichtung im adsorbierenden Betrieb.

Bei einer anderen alternativen Adsorptionsanlage ist ebenfalls nur ein im Saugbetrieb betriebenes Gebläse vorgesehen. Auf Kosten der Regeneration im Gegenstrom und im Gleichstrom zum adsorbierenden Betrieb kommt diese Adsorptionsanlage aber ohne die verhältnismäßig aufwendige Schalt-Ventil-Kombination aus (DE-P3904791.1-43, DE-P3904793.8-43).

Der Erfindung liegt die Aufgabe zugrunde, eine Adsorptionsanlage zu schaffen, die ohne aufwendige Schalt-Ventil-Kombination eine zweiphasige Regeneration der Adsorber ermöglicht, wobei in der ersten Phase die erwärmte Umluft im Gegenstrom und in der zweiten Phase die kühlende Umluft im Gleichstrom zur Strömungsrichtung im adsorbierenden Betrieb erfolgt.

Diese Aufgabe wird bei einer warmregenerierenden Adsorptionsanlage der eingangs genannten Art dadurch gelöst, daß der Lufterhitzer und die Saugseite des Sauggebläses jeweils über eine sperrbare Leitung an einem gemeinsamen Anschluß des einen 4-Wege-Ventils angeschlossen sind und die Saugseite des Sauggebläses und ein Einlaß für Umgebungsluft jeweils über eine sperrbare Leitung mit einem gemeinsamen Anschluß des anderen 4-Wege-Ventils verbunden sind, wobei die gemeinsamen Anschlüsse der 4-Wege-Ventile wahlweise auf Durchgang zu dem einen oder anderen Adsorber schaltbar sind.

Die erfindungsgemäße Adsorptionsanlage hat gegenüber der bekannten Adsorptionsanlage den Vorteil, daß kein besonderes, auf Saug- und Druckbetrieb umschaltbares Gebläse benötigt wird, vielmehr das Gebläse ausschließlich im Saugbetrieb betrieben wird. Der Hauptvorteil der bekannten Adsorptionsanlage, nämlich daß in den beiden Phasen der Regeneration der Adsorber mit warmer Luft im Gegenstrom und mit kühlender Luft im Gleichstrom zur Strömung der feuchten Luft während der Adsorption betrieben wird, bleibt erhalten, wenn auch mit etwas geringerer Effektivität wegen des Betriebs mit Unterdruck. Die entgegengesetzte Strömungsrichtung in den beiden Phasen der Regeneration braucht aber nicht mit einem sehr hohen schaltungstechnischen Aufwand erkauft zu werden, wie bei der anderen alternativen Lösung. Es wird lediglich eine zusätzliche absperrbare Verbindungsleitung zwischen der Saugseite des Gebläses und dem einen Anschluß des einen 4-Wege-Ventils sowie ein absperrbarer Einlaß für die Umgebungsluft benötigt. Dafür liegt in der zweiten Phase der Regeneration, in der mit kühlender Umgebungsluft gearbeitet wird, der ausgeschaltete Lufterhitzer aber nicht mehr in dem Strömungskreis, so daß die Führung der kühlenden Umgebungsluft mit geringerem Strömungswiderstand erfolgt.

Um die Regeneration, insbesondere die Umschaltung von der einen Phase auf die andere Phase und die Umschaltung von dem einen Adsorber auf den anderen Adsorber zu automatisieren, kann nach einer Ausgestaltung der Erfindung an der Saugseite des Sauggebläses ein Temperaturfühler einer Steuereinrichtung für die Umschaltung der Absperrventile in den Leitungen und die Ausschaltung des Lufterhitzers vorgesehen sein.

Im folgenden wird die Erfindung anhand einer Zeichnung näher erläutert, die eine Adsorptionsanlage im prinzipiellen Aufbau zeigt.

Die Adsorptionsanlage weist zwei wechselweise im adsorbierenden und regenerierenden Betrieb betriebene Adsorber 1,2 auf, deren Ein- und Ausgangsleitungen 3-6 zu 4-Wege-Ventilen 7,8 führen. Über das eine 4-Wege-Ventil 7 ist zu entfeuchtende Druckluft zuführbar, während über das andere 4-Wege-Ventil 8 die entfeuchtete Luft abführbar ist. Die 4-Wege-Ventile 7,8 sind so einstellbar, daß sowohl im adsorbierenden als auch zumindest in einer Phase des regenerierenden Betriebes die Adsorber 1,2 von unten nach oben durchströmt werden. Der vierte freie Anschluß des 4-Wege-Ventils 7 ist über eine Leitung 9 mit einem Absperrventil 9a mit der Saugseite eines Sauggebläses 15 verbunden. An dem freien Anschluß des 4-Wege-Ventils 7 sind ferner eine Einlaßleitung 10 mit einem Absperrventil 10a und einem Luftfilter 10b für kühle Umgebungsluft und eine Druckentlastungsleitung 11 mit einem Expansionsventil 11a und einem nachgeschalteten Schalldämpfer 1b angeschlossen. An der Saugseite des Sauggebläses 15 ist ferner ein Temperaturfühler 16 angeschlossen.

Das 4-Wege-Ventil 7 ist mit einem an den Leitungen 3,4 angeschlossenen Bypass 12 überbrückt, in dem ein Schaltventil 17 und ein Drosselventil 18 liegen.

An dem freien vierten Anschluß des 4-Wege-Ventils 8 sind ein Lufterhitzer 13 und die Saugseite des Sauggebläses 15 jeweils über eine Leitung 14,19 mit Absperrventilen 14a,19a angeschlossen.

Im folgenden wird der Betrieb der Adsorptionsanlage erläutert:

Während der Adsorber 1 im adsorbierenden Betrieb betrieben wird, wird der Adsorber 2 regeneriert.

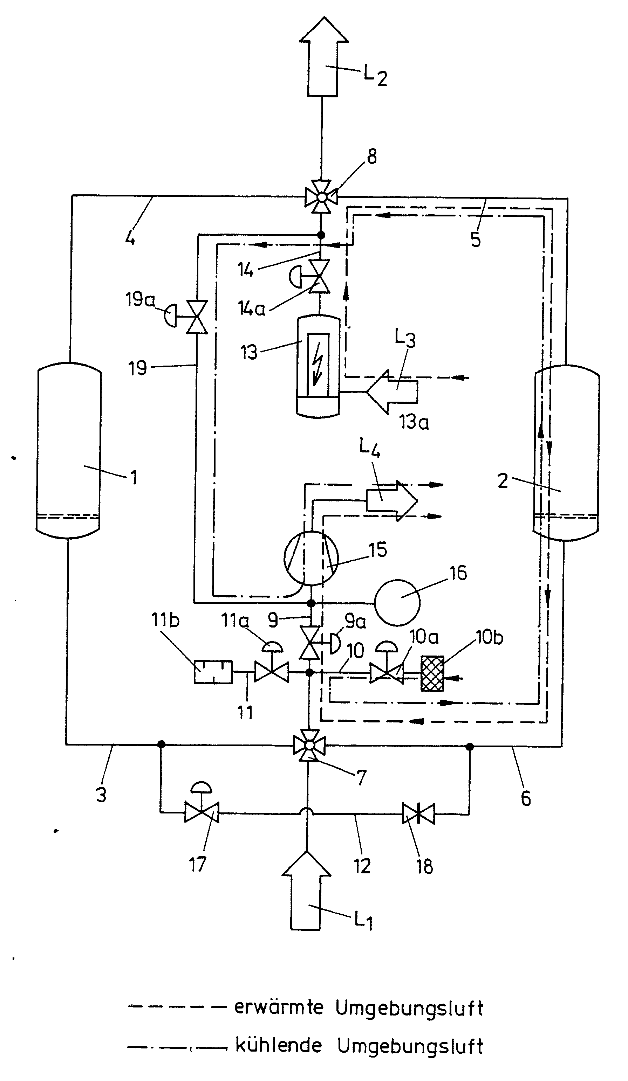

Die zu entfeuchtende, in der Zeichnung durch den großen Pfeil $L_1$ unterhalb des 4-Wege-Ventils 7 angedeutete Luft wird unter Druck von einem nicht dargestellten Gebläse über das 4-Wege-Ventil 7 und die Eingangsleitung 3 dem Adsorber 1 von unten zugeführt und hier durch das Adsorptionsmittel entfeuchtet. Die entfeuchtete Luft gelangt dann über die Ausgangsleitung 4 und das 4-Wege-Ventil 8 zur ebenfalls nicht dargestellten Verbrauchsstelle. Diese Luft ist oberhalb des Ventils 8 durch den großen Pfeil $L_2$ angedeutet.

Für die Regenerierung des Adsorptionsmittels des Adsorbers 2 ist der Lufterhitzer 13 eingeschaltet. Umgebungsluft, die in der Zeichnung rechts vom Lufterhitzer 13 durch den großen Pfeil $L_3$ angedeutet ist, gelangt über den Lufterhitzer 13, wo sie erwärmt wird, über die Leitung 14 mit dem geöffneten Ventil 14a, das 4-Wege-Ventil 8 und die Leitung 5 von oben in den Adsorber 2 und wird hier mit der Feuchtigkeit des Adsorptionsmittels beladen. Über die Leitung 6, das 4-Wege-Ventil 7 und die Leitung 9 mit geöffnetem Ventil 9a gelangt sie zur Saugseite des Sauggebläses 15 und wird von hier in die Atmosphäre abgeblasen, was durch den großen Pfeil $L_4$ angedeutet ist. Während dieser ersten Phase der Regeneration sind die Ventile 10a,11a,17,19a gesperrt. Diese Phase dauert so lange, bis ein bestimmtes Temperaturniveau vom Temperaturfühler 16 festgestellt wird. Dieses Temperaturniveau ist ein Kriterium dafür, daß die Regenerationsphase mit erwärmter Luft beendet ist. Über eine nicht dargestellte Steuereinrichtung erfolgt dann eine Umschaltung der Ventile 9a,10a,14a,19a sowie eine Ausschaltung des Lufterhitzers 13 derart, daß die Ventile 9a und 14a gesperrt und die Ventile 10a und 19a geöffnet werden. Bei andauerndem Saugbetrieb des Sauggebläses 15 wird dann Umluft über das Filter 10b, die Leitung 10, das unverändert geschaltete 4-Wege-Ventil 7 und die Leitung 6 dem Adsorber 2 von unten zugeführt, wo diese kühle Umluft das in der vorhergehenden Phase erwärmte Adsorptionsmittel kühlt. Die dabei Wärme aufnehmende Luft gelangt dann über die Leitung 5, das unverändert geschaltete 4-Wege-Ventil 8 und die Leitung 19 mit geöffnetem Ventil 19a zur Saugseite des Sauggebläses 15 und wird von hier in die Atmosphäre abgeblasen. Diese Phase wird temperaturmäßig vom Temperaturfühler 16 überwacht und dauert so lange an, bis die Luft eine bestimmte untere Temperatur erreicht hat. Diese Abkühlung des Adsorptionsmittels in der zweiten Phase dient dazu, ohne Temperaturpeak die Adsorption mit dem regenerierten Adsorber 2 aufnehmen zu können.

Zur Vorbereitung der Umschaltung von Regeneration auf Adsorption bzw. umgekehrt für die beiden Adsorber 1,2 findet eine Druckangleichung in beiden Teilen der Adsorptionsanlage durch Öffnen des Schaltventils 17 statt. Die 4-Wege-Ventile 7,8 werden umgeschaltet, und nach Sperrung des Schaltventils 17 kann dem Adsorber 2 zu entfeuchtende Luft zugeführt werden. Bevor die Regeneration des Adsorbers 1 aber eingeleitet wird, wird das Schaltventil 11a geöffnet, und über den nachgeschalteten Schalldämpfer 11b der Adsorber 1 mit seinen Leitungen 3,4 entlüftet.

**Ansprüche**

1. Warmregenerierende Adsorptionsanlage für feuchte, gasförmige Medien mit zwei parallel zueinanderliegenden Adsorbern (1,2), die im Wechsel von adsorbierendem Betrieb auf regenerierenden Betrieb mittels in ihren Zu- und Abfuhrleitungen (3-6) angeordneten 4-Wege-Ventilen (7,8) umschaltbar sind, wobei für den regenerierenden Betrieb stromab von den Adsorbern (1,2) ein Sauggebläse (15) angeordnet ist, das dem jeweils zu regenerierenden Adsorber (1,2) in einer ersten Phase über einen eingeschalteten Lufterhitzer (13) erwärmte Umluft und in einer anschließenden zweiten Phase bei ausgeschaltetem Lufterhitzer (13) kühlende Umluft mit zur Strömungsrichtung im adsorbierenden Betrieb gleicher Strömungsrichtung zuführt, **dadurch gekennzeichnet,** daß der Lufterhitzer (13) und die Saugseite des Sauggebläses (15) jeweils über eine absperrbare Leitung (14,19) an einem gemeinsamen Anschluß des einen 4-Wege-Ventils (8) angeschlossen sind und die Saugseite des Sauggebläses (15) und ein Einlaß für Umgebungsluft jeweils über eine absperrbare Leitung (9,10) mit einem gemeinsamen Anschluß des anderen 4-Wege-Ventils (7) verbunden sind, wobei die gemeinsamen Anschlüsse der 4-Wege-Ventile (7,8) wahlweise auf Durchgang zu dem einen oder anderen Adsorber (1,2) schaltbar sind.

2. Adsorptionsanlage nach Anspruch 1, **dadurch gekennzeichnet,** daß an der Saugseite des Sauggebläses (15) ein Temperaturfühler (16) einer Steuereinrichtung für die Schaltventile (9a,10a,14a,19a) in den absperrbaren Leitungen (9,10,14,19) und für den Betrieb des Lufterhitzers (13) in beiden Phasen der Regeneration angeordnet ist.

EP 0 398 139 A1

erwärmte Umgebungsluft

kühlende Umgebungsluft

**Europäisches Patentamt**

**EUROPÄISCHER RECHERCHENBERICHT**

Nummer der Anmeldung

EP 90108698.3

## EINSCHLÄGIGE DOKUMENTE

| Kategorie | Kennzeichnung des Dokuments mit Angabe, soweit erforderlich der maßgeblichen Teile | Betrifft Anspruch | KLASSIFIKATION DER ANMELDUNG (Int Cl⁵) |
|---|---|---|---|
| A | DE - A1 - 2 803 038 (DROOGTECHNIEK) <br> * Seite 6, Zeile 21 - Seite 11, letzte Zeile; Fig. * <br> -- | 1,2 | B 01 D 53/04 <br> B 01 D 53/26 |
| A | DE - B - 1 544 074 (MC GRAW-EDISON) <br> * Ansprüche; Fig. * <br> -- | 1,2 | |
| A | DE - A1 - 3 720 915 (SABROE) <br> * Gesamt * <br> -- | 1 | |
| A | EP - A1 - 0 017 155 (PALL) <br> * Seite 25, Zeile 8 - Seite 27, Zeile 1; Fig. 4 * <br> ---- | 1 | |

**RECHERCHIERTE SACHGEBIETE (Int Cl⁵)**

B 01 D
B 01 J

Der vorliegende Recherchenbericht wurde für alle Patentansprüche erstellt.

| Recherchenort | Abschlußdatum der Recherche | Prüfer |
|---|---|---|
| WIEN | 07-08-1990 | BECKER |